# EUROPEAN PATENT SPECIFICATION

(11) **EP 4 279 785 B1**
(45) Date of publication and mention of the grant of the patent: **25.02.2026**
(21) Application number: 21919494.1
(22) Date of filing: 22.09.2021
(51) Int. Cl.: F16L 11/08, F16L 11/12, F16L 11/133

(54) **MARINE HOSE**
UNTERWASSERSCHLAUCH
TUYAU MARIN

(30) Priority: 14.01.2021 JP 2021003867
(43) Date of publication of application: 22.11.2023
(73) Proprietor: The Yokohama Rubber Co., Ltd., Hiratsuka-shi, Kanagawa 254-8601 (JP)
(72) Inventor: SUEFUJI, Ryotaro, Hiratsuka-shi, Kanagawa 254-8601 (JP)
(74) Representative: Grünecker Patent- und Rechtsanwälte PartG mbB
(86) International application number: PCT/JP2021/034807
(87) International publication number: WO 2022/153603

(56) References cited:
- CN-A- 103 252 951
- JP-A- 2001 090 873
- JP-A- 2001 090 873
- JP-A- 2010 265 991
- JP-A- 2010 265 991
- JP-A- H0 437 540
- JP-A- S6 339 338

## Description

### Technical Field

The present invention relates to a marine hose and relates particularly to a marine hose including a release layer that can reliably separate an inner reinforcing layer group from an outer reinforcing layer group to form a gap when an inner surface rubber layer and the inner reinforcing layer group are damaged and has excellent formability in a manufacturing step of the marine hose.

A so-called double carcass-type marine hose is one of marine hoses that are connected between an offshore tanker and a land facility or the like to transport fluid, such as crude oil, at sea. A known double carcass-type marine hose has a structure in which a non-adhesive layer is interposed between an inner reinforcing layer group and an outer reinforcing layer group layered between an inner surface rubber layer and a cover layer (see, for example, Patent Document 1). When the inner surface rubber layer and the inner reinforcing layer group are damaged, the inner reinforcing layer group and the non-adhesive layer are separated from each other to form a gap therebetween. Then, a fluid leaking from a flow path of the marine hose flows through the gap and reaches a leak detector disposed at a hose longitudinal end portion, and a fluid leakage is detected.

In the related art, the non-adhesive layer has been mainly formed of a polyethylene film (paragraph 0020 of Patent Document 1). The polyethylene film has excellent releasability and is suitable for being separated from the inner reinforcing layer group to form a gap. Unfortunately, polyethylene has large thermal shrinkage and thus has difficulty in forming a non-adhesive layer that includes a thin film wound around the inner reinforcing layer group without wrinkles or the like and does not cause leakage. For this reason, the manufacturing process of a marine hose requires a large number of man-hours, such as making the polyethylene film narrower and carefully winding it. Thus, there is room for improvement in using a film that can reliably separate the inner reinforcing layer group from the outer reinforcing layer group to form a gap and in improving the formability of the film.

### Citation List

### Patent Literature

Patent Document 1: JP 2010-265991 A

### Summary of Invention

### Technical Problem

An object of the present invention is to provide a marine hose including a release layer that can reliably separate an inner reinforcing layer group from an outer reinforcing layer group to form a gap when an inner surface rubber layer and the inner reinforcing layer group are damaged and has excellent formability.

### Solution to Problem

To achieve the object described above, a marine hose according to an embodiment of the present invention includes: an inner reinforcing layer group, a release layer, and an outer reinforcing layer group layered in order from an inner circumferential side between an inner surface rubber layer and a cover layer; a communication pipe extending to a hose longitudinal end portion and configured to communicate with a gap to be formed between the inner reinforcing layer group and the release layer; and a leak detector connected to the communication pipe at the hose longitudinal end portion and disposed on a hose surface. The release layer is composed mainly of PVA and has a water dissolution temperature of 50°C or higher.

### Advantageous Effects of Invention

According to the present invention, when the inner surface rubber layer and the inner reinforcing layer group are damaged, the inner reinforcing layer group and the release layer are separated from each other to form a gap therebetween. Since the release layer is mainly composed of PVA and has a water dissolution temperature of 50°C or higher, the release layer exhibits good separability from the inner reinforcing layer group and can reliably form the gap. A fluid leaking from a flow path on an inner side of the inner surface rubber layer flows through the gap and the communication pipe and reaches the leak detector, which is advantageous for reliably detecting a fluid leakage. In addition, the release layer has small thermal shrinkage due to its material characteristics, and wrinkles are less likely to occur even when the release layer is thin. Therefore, the PVA film that forms the release layer has excellent formability, which is advantageous for efficiently forming a release layer that does not cause leakage. This contributes to improvement in quality and productivity of the marine hose.

### Brief Description of Drawings

FIG. 1 is an explanatory diagram illustrating a marine hose according to an embodiment of the present invention.
FIG. 2 is an explanatory diagram illustrating an upper half around one longitudinal end portion of the marine hose in FIG. 1 enlarged in a longitudinal cross-sectional view.
FIG. 3 is an explanatory diagram illustrating a transverse cross-section structure of the marine hose in a cross-sectional view taken along A-A of FIG. 1.
FIG. 4 is an explanatory diagram illustrating an upper half of the central portion in the longitudinal direction of the marine hose in FIG. 1 in a longitudinal cross-sectional view.
FIG. 5 is an explanatory diagram illustrating a state in which the inner surface rubber layer and the inner reinforcing layer group of FIG. 4 are damaged.

### Description of Embodiments

A marine hose according to embodiments of the present invention will be described below with reference to the drawings.

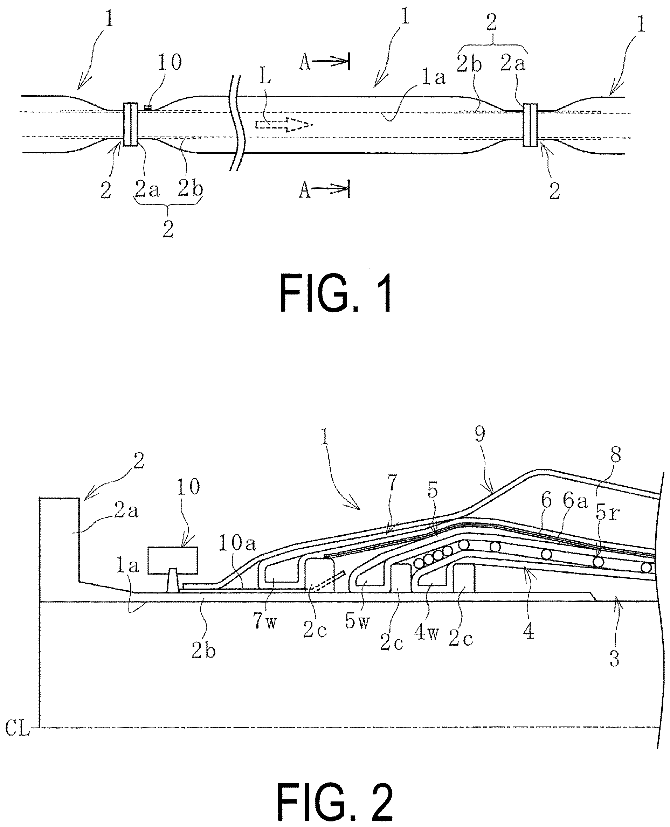

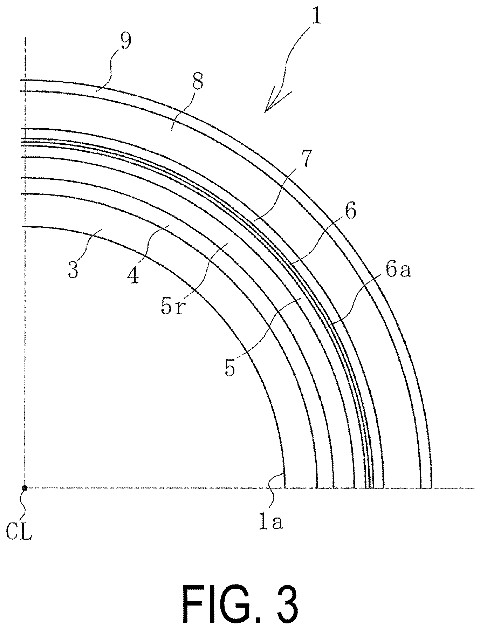

An embodiment of a marine hose 1 illustrated in FIGS. 1 to 4 includes, at both ends in the longitudinal direction thereof, connecting end portions 2 for connecting to other marine hoses 1. The connecting end portions 2 include a nipple 2b extending in the longitudinal direction of the marine hose 1 and a flange 2a joined to one end of the nipple 2b in the longitudinal direction. For example, about 8 or more and 10 or less of marine hoses 1 are typically connected and used. A dot-dash line CL in the drawings is a center line extending in a hose longitudinal direction through the cross-sectional center of the marine hose 1. Although FIG. 3 illustrates a range of one-quarter of the transverse cross-section of the marine hose 1 and the other range not illustrated (a range of three-quarters) also has the same structure.

The marine hose 1 includes a communication pipe 10a extending in the hose longitudinal direction on the outer circumferential side of the nipple 2b and inserted from the outside of the hose into the inside of the hose. The communication pipe 10a is connected to a leak detector 10 disposed on the hose surface at one longitudinal end portion of the marine hose 1. The leak detector 10 can adopt various known types of leak detectors. In this embodiment, the leak detector 10 is disposed only at one longitudinal end portion of the marine hose 1, can also be disposed at both longitudinal end portions, and is disposed at least at one end portion in the longitudinal direction.

Between the nipples 2b at both ends of the marine hose 1, an inner surface rubber layer 3, an inner first reinforcing layer 4, a reinforcing wire layer 5r, an inner second reinforcing layer 5, a release layer 6, an outer reinforcing layer group 7, a buoyant layer 8, and a cover layer 9 are coaxially layered in order from the inner circumferential side of a cylindrical flow path 1a as a center (i.e., around the center line CL as the center). The inner first reinforcing layer 4, the inner second reinforcing layer 5, and the outer reinforcing layer group 7 are fixed to the nipple 2b by nipple wires 4w, 5w, and 7w at respective one ends and fixing rings 2c disposed projecting from the outer circumferential surface of the nipple 2b.

The inner first reinforcing layer 4, the reinforcing wire layer 5r, and the inner second reinforcing layer 5 constitute an inner reinforcing layer group. Therefore, the release layer 6 is interposed between the inner reinforcing layer group 4, 5r, 5 and the outer reinforcing layer group 7. The release layer 6 is bonded to the inner circumferential surface of the outer reinforcing layer group 7 via an intermediate rubber layer 6a layered on the outer circumferential surface of the release layer 6. The inner circumferential surface of the release layer 6 is layered on the outer circumferential surface of the inner second reinforcing layer 5 but is not bonded to the inner second reinforcing layer 5. Details of the release layer 6 will be described below.

The inner circumferential surface of the inner surface rubber layer 3 serves as the flow path 1a for a fluid L. Examples of the fluid L include crude oil, gasoline, and LPG. An appropriate material is used for the inner surface rubber layer 3 depending on the type of the fluid L. In a case where the fluid L is crude oil or the like, the inner surface rubber layer 3 is formed of nitrile rubber or the like having excellent oil resistance.

The inner first reinforcing layer 4 includes a plurality of cord reinforcing layers layered. The number of cord reinforcing layers is appropriately set to the required number, for example, about four or more and thirty or less. Each of the cord reinforcing layers includes a large number of rubber-coated reinforcing cords arranged side by side.

In each of the cord reinforcing layers, the large number of reinforcing cords extend inclined at a predetermined angle with respect to the center line CL. The reinforcing cords of the cord reinforcing layers layered vertically adjacent to each other intersect with opposite inclination directions. The reinforcing cord to be used includes a resin fiber cord made from polyester, polyketone, aramid, vinylon, nylon, or the like or a steel cord, which is usually used in the marine hose.

Each of the cord reinforcing layers is covered with a thin rubber layer for adhesion, and the cord reinforcing layers adjacently layered are bonded via the thin rubber layer. The inner circumferential surface of the first inner reinforcing layer 4 and the outer circumferential surface of the inner surface rubber layer 3 are bonded in contact with each other.

The reinforcing wire layer 5r is formed with reinforcing wires spirally wound around the outer circumferential surface of the first inner reinforcing layer 4 at predetermined intervals in the longitudinal direction of the marine hose 1. The reinforcing wire layer 5r is also covered with a rubber layer for adhesion. The outer circumferential surface of the inner first reinforcing layer 4 and the outer circumferential surface of the reinforcing wire layer 5r are bonded in contact with each other. The reinforcing wire layer 5r can be optionally provided. The reinforcing wire layer 5r can also be disposed inside the first inner reinforcing layer 4.

The inner second reinforcing layer 5 and the outer reinforcing layer group 7 each have substantially the same structure as that of the inner first reinforcing layer 4 and include a plurality of cord reinforcing layers layered. The inner circumferential surface of the inner second reinforcing layer 5 and the outer circumferential surface of the reinforcing wire layer 5r are bonded in contact with each other. The outer reinforcing layer group 7 is a reinforcing layer that supports the inner reinforcing layer group 4, 5r, 5 and resists an impact force (internal pressure) generated in the marine hose 1 when the inner reinforcing layer group 4, 5r, 5 is damaged.

The buoyant layer 8 is formed of a material that exhibits buoyancy to float the marine hose 1 on the sea, such as sponge rubber or polyurethane foam. The layer thickness of the buoyant layer 8 (layer thickness other than both longitudinal end portions) varies depending on, for example, the size of and the buoyancy required for the marine hose 1 and is, for example, about 60 mm or more and 300 mm or less. The outer circumferential surface of the outer reinforcing layer group 7 and the inner circumferential surface of the buoyant layer 8 are bonded in contact with each other.

The cover layer 9 is formed of a non-water-permeable material, such as rubber, and has a line pattern or the like having excellent visibility on its surface. An appropriate material having excellent weather resistance, scratch resistance, or the like is used for the cover layer 9. The outer circumferential surface of the buoyant layer 8 and the inner circumferential surface of the cover layer 9 are bonded in contact with each other.

The release layer 6 is composed mainly of PVA (polyvinyl alcohol) and is soluble in water. In addition to PVA, a small amount of a plasticizer or the like is added to adjust water solubility. Added is, for example, diethylene glycol, methanol, salicylic acid, lithium chloride, or 2,2-dimethyl-1,3-propanediol.

The water dissolution temperature of the release layer 6 is 50°C or higher. PVA having a water dissolution temperature of 50°C or higher is known, commonly used, and thus is available. To grasp the water dissolution temperature, a PVA film test piece having a size of about 10 mm × 10 mm × 30 µm thick is put into 500 ml of water at different temperatures at intervals of 5°C, and the time required for the entire test piece to dissolve is measured. The highest water temperature at which the entire test piece dissolves within 60 seconds is defined as the water dissolution temperature of the test piece. Thus, when a test piece of the release layer 6 is put into 500 ml of water of less than 50°C, the entire test piece does not dissolve within 60 seconds.

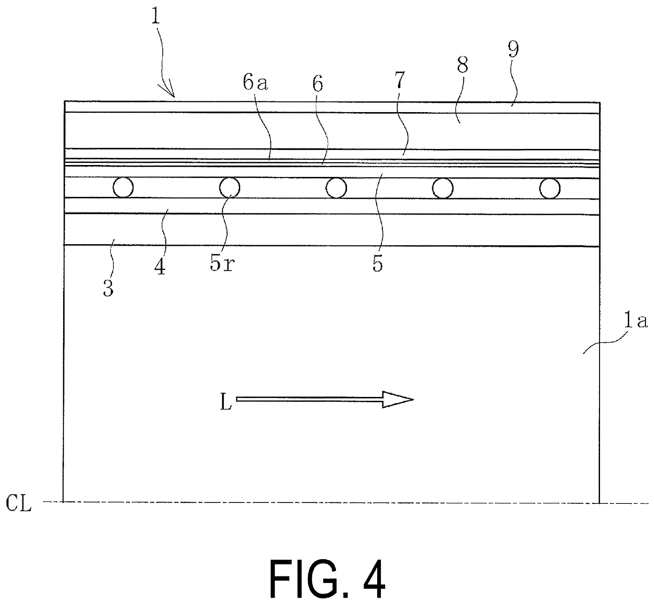

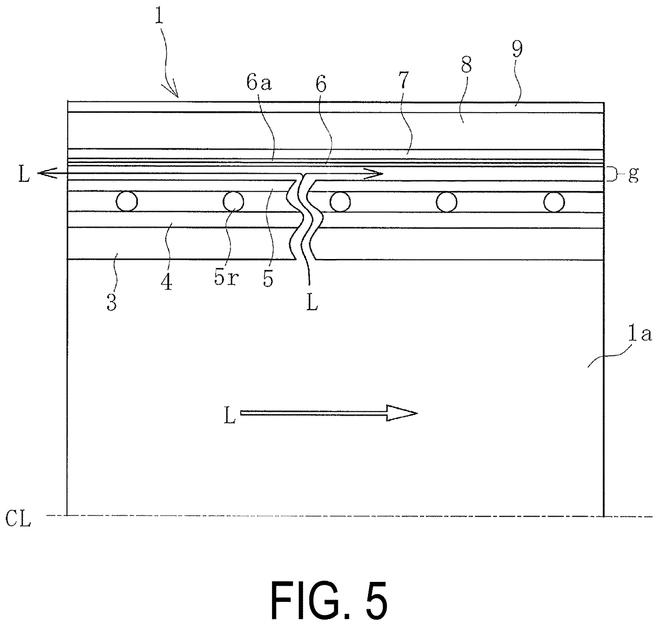

In a normal state in which no fluid leakage occurs in the marine hose 1, the fluid L flows through the flow path 1a as illustrated in FIG. 4. On the other hand, as illustrated in FIG. 5, when the inner surface rubber layer 3 and the inner reinforcing layer group 4, 5r, 5 are damaged, the release layer 6 is pressed by the liquid L leaking from the flow path 1a. This causes the release layer 6 to be separated from the inner second reinforcing layer 5, forming a gap g therebetween. The gap g is formed extending in the hose longitudinal direction.

The communication pipe 10a communicates with the gap g, and the liquid L leaking out passes through the communication pipe 10a and reaches the leak detector 10. As a result, the leak detector 10 detects that the fluid L is leaking from the flow path 1a.

As described above, when the inner surface rubber layer 3 and the inner reinforcing layer group 4, 5r, 5 are damaged, the inner reinforcing layer group 4, 5r, 5 and the release layer 6 are separated from each other to form the gap g therebetween. Since the release layer 6 is composed mainly of PVA and has a water dissolution temperature of 50°C or higher, the release layer 6 exhibits good separability from the inner second reinforcing layer 5. This can reliably form the gap g extending in the hose longitudinal direction. As a result, it is advantageous to reliably detect a fluid leakage from the flow path 1a by the leak detector 10.

The water dissolution temperature of less than 50°C makes the water solubility of the release layer 6 too good and has difficulty in separating the release layer 6 from the inner second reinforcing layer 5. The upper limit of the water dissolution temperature is not limited to a particular value and is, for example, about 100°C or about 80°C.

In the manufacturing step of the marine hose 1, the various constituent members described above are sequentially layered on an outer circumferential side of a mandrel to form a molded article. Next, the molded article disposed inside the mold is vulcanized (steam-vulcanized) to manufacture the marine hose 1. In forming the release layer 6 in the manufacturing step, the PVA film that forms the release layer 6 is formed into a band-like shape and spirally wound around the outer circumferential surface of the inner second reinforcing layer 5.

Since the release layer 6 (PVA film) has smaller thermal shrinkage than polyethylene, wrinkles are less likely to occur even when the release layer 6 is a thin layer of from 20 µm to 40 µm. Thus, the PVA film has excellent formability. Thus, without excessive man-hours, the release layer 6 with the band-like PVA film overlapped with each other in the width direction without any gap and spirally wound can be formed. Thus, it is advantageous to efficiently form the release layer 6 which does not cause leakage. This contributes to improvement in quality and productivity of the marine hose 1.

The thickness of the release layer 6 of less than 20 µm has difficulty in making the water dissolution temperature 50°C or higher. In addition, the layer thickness of less than 20 µm has insufficient rigidity, is disadvantageous for winding the PVA film while suppressing generation of wrinkles, and cannot have good formability. The layer thickness of the release layer 6 exceeding 40 µm is disadvantageous for reducing the weight of the marine hose 1. Consequently, the layer thickness of the release layer 6 is preferably 20 µm or more and 40 µm or less.

Too small or too large the elongation at break of the release layer 6 decreases the formability, and thus the elongation at break is preferably 150% or more and 400% or less. This elongation at break is a value measured in accordance with the test method specified in JIS K7113. The temperature condition is a normal temperature (about 25°C). The elongation at break of the release layer 6 can be set to a desired value by a known method such as increasing or decreasing the blending amount of additive or changing the stretching conditions.

Furthermore, to have good formability and sufficient durability of the release layer 6, the tensile strength is preferably 25 MPa or more and 80 MPa or less. Too small tensile strength of the release layer 6 has insufficient durability, and too large tensile strength thereof degrades the formability. This tensile strength is a value measured in accordance with the test method specified in JIS K7113. The temperature condition is a normal temperature (about 25°C). The tensile strength of the release layer 6 can be set to a desired value by a known method such as increasing or decreasing the blending amount of additive or changing the stretching conditions.

### Example

Five types of test samples of marine hoses having the same structure as the structure illustrated in FIGS. 1 to 4 and having an inner diameter of 195 mm were manufactured under the same manufacturing condition (Examples 1 to 3, Comparative Example, and Conventional Example). As shown in Table 1, the only differences between the test samples are the specifications of the release layer (layer thickness is about 30 µm). The following formability and separability of each test sample were checked, and the results are shown in Table 1. The water dissolution temperature in Table 1 is a value measured by the test method described above. The release layers of Examples 1 to 4 have, for example, different blend of additives and stretching conditions to differentiate the physical properties.

### Formability

In forming a test sample, the film that forms the release layer was spirally wound around the outer circumferential surface of the inner second reinforcing layer to form the release layer. The manufactured test sample was disassembled, and the degree of occurrence of wrinkles at the release layer and the presence or absence of a gap of the band-like film in the width direction were checked. The case where no wrinkle or gap causing problems in quality was observed was indicated by Good, and the case where a wrinkle or a gap was observed was indicated by Poor.

### Separability

A fragment of about 5 cm × 5 cm was cut out from each test sample, and a test (180° peel test) of separating the release layer from the inner second reinforcing layer by humans (by hand work) was performed. The case where the separation could be easily performed was indicated by Excellent, the case where the separation could be but not easily performed was indicated by Good, and the case where the separation could not be performed was indicated by Poor. Accordingly, Excellent means that the separability is the best.

**Table 1**

| | Example 1 | Example 2 | Example 3 | Comparative Example | Conventional Example |
|---|---|---|---|---|---|
| Material (main component) | PVA | PVA | PVA | PVA | PE |
| Water dissolution temperature (°C) | 50 | 69 | 70 | 5 | - |
| Elongation at break (%) | 340 | 362 | 200 | 290 | 120 |
| Tensile strength (MPa) | 62 | 52 | 52 | 30 | 20 |
| Formability | Good | Good | Good | Good | Poor |
| Separability | Good | Excellent | Excellent | Poor | Good |

From the results of Table 1, it can be seen that in Examples 1 to 3, both the formability and separability of the release layer are good.

### Reference Signs List

1 Marine hose
1a Flow path
2 Connecting end portion
2a Flange
2b Nipple
2c Fixing ring
3 Inner surface rubber layer
4 Inner first reinforcing layer (inner reinforcing layer group)
4w Nipple wire
5 Inner second reinforcing layer (inner reinforcing layer group)
5r Reinforcing wire layer (inner reinforcing layer group)
5w Nipple wire
6 Release layer (PVA film)
6a Intermediate rubber layer
7 Outer reinforcing layer group
7w Nipple wire
8 Buoyant layer
9 Cover layer
10 Leak detector
10a Communication pipe
L Fluid
g Gap

## Claims

1. A marine hose (1), comprising:
an inner reinforcing layer group (4, 5), a release layer (6), and an outer reinforcing layer group (7) layered in order from an inner circumferential side between an inner surface rubber layer (3) and a cover layer (9);
a communication pipe (10a) extending to a hose longitudinal end portion and configured to communicate with a gap (g) to be formed between the inner reinforcing layer group (4, 5) and the release layer (6); and
a leak detector (10) connected to the communication pipe (10a) at the hose longitudinal end portion and disposed on a hose surface, **characterized in that**
the release layer (6) being composed mainly of PVA and having a water dissolution temperature of 50°C or higher, wherein to grasp the water dissolution temperature, a PVA film test piece having a size of about 10 mm X 10 mm X 30 µm thick is put into 500 ml of water at different temperatures at intervals of 5°C, and the time required for the entire test piece to dissolve is measured, wherein the highest water temperature at which the entire test piece dissolves within 60 second is defined as the water dissolution temperature of the test piece.

2. The marine hose (1) according to claim 1, wherein the release layer (6) has a layer thickness of 20 µm or more and 40 µm or less.

3. The marine hose (1) according to claim 1 or 2, wherein the release layer (6) has an elongation at break of 150% or more and 400% or less.

4. The marine hose (1) according to any one of claims 1 to 3, wherein the release layer (6) has a tensile strength of 25 MPa or more and 80 MPa or less.

## Patentansprüche

1. Marineschlauch (1), der umfasst:
eine innere Verstärkungsschicht-Gruppe (4, 5), eine Trennschicht (6) sowie eine äußere Verstärkungsschicht-Gruppe (7), die der Reihe nach von einer Innenumfangsseite her zwischen einer Innenflächen-Gummischicht (3) und einer Deckschicht (9) geschichtet sind;
eine Verbindungsröhre (10a), die sich zu einem Längs-Endabschnitt des Schlauchs erstreckt und so ausgeführt ist, dass sie mit einem Zwischenraum (g) in Verbindung steht, der zwischen der inneren Verstärkungsschicht-Gruppe (4, 5) und der Trennschicht (6) ausgebildet wird; sowie
eine Leck-Erfassungseinrichtung (10), die mit der Verbindungsröhre (10a) an dem Längs-Endabschnitt des Schlauchs verbunden ist und an einer Schlauch-Oberfläche angeordnet ist,
**dadurch gekennzeichnet, dass**
die Trennschicht (6) hauptsächlich aus PVA besteht und eine Wasser-Auflösungstemperatur von 50 °C oder darüber hat, wobei, um die Wasser-Auflösungstemperatur zu bestimmen, ein Prüfkörper aus PVA-Film mit einer Größe von ungefähr 10 mm x 10 mm x 30 µm Dicke in 500 ml Wasser bei unterschiedlichen Temperaturen in Intervallen von 5 °C gegeben wird und die Zeit gemessen wird, die zum Auflösen des gesamten Prüfkörpers erforderlich ist, und dabei die höchste Wassertemperatur, bei der sich der gesamte Prüfkörper innerhalb von 60 Sekunden auflöst, als die Wasser-Auflösungstemperatur des Prüfkörpers definiert ist.

2. Marineschlauch (1) nach Anspruch 1, wobei die Trennschicht (6) eine Schichtdicke von 20 µm oder mehr und 40 µm oder weniger hat.

3. Marineschlauch (1) nach Anspruch 1 oder 2, wobei die Trennschicht (6) eine Reißdehnung von 150 % oder mehr und 400 % oder weniger hat.

4. Marineschlauch (1) nach einem der Ansprüche 1 bis 3, wobei die Trennschicht (6) eine Zugfestigkeit von 25 MPa oder mehr und 80 MPa oder weniger hat.

## Revendications

1. Tuyau marin (1), comprenant :
un groupe de couches de renforcement interne (4, 5), une couche de libération (6), et un groupe de couches de renforcement externe (7) disposés dans cet ordre depuis un côté circonférentiel interne entre une couche de caoutchouc de surface interne (3) et une couche de recouvrement (9) ;
un tube de communication (10a) s'étendant jusqu'à une partie terminale longitudinale de tuyau et configuré pour communiquer avec un espace (g) à former entre le groupe de couches de renforcement interne (4, 5) et la couche de libération (6) ; et
un détecteur de fuite (10) connecté au tube de communication (10a) au niveau de la partie terminale longitudinale de tuyau et disposé sur une surface de tuyau, **caractérisé en ce que**
la couche de libération (6) est composée principalement de PVA et a une température de dissolution dans l'eau de 50 °C ou plus, dans lequel pour appréhender la température de dissolution dans l'eau, un morceau test de film de PVA ayant une taille d'environ 10 mm x 10 mm x 30 µm d'épaisseur est placé dans 500 ml d'eau à différentes températures à des intervalles de 5 °C, et le temps nécessaire pour que la totalité du morceau test soit dissoute est mesuré, dans lequel la température d'eau la plus élevée à laquelle la totalité du morceau test est dissoute dans les 60 secondes est définie comme la température de dissolution dans l'eau du morceau test.

2. Tuyau marin (1) selon la revendication 1, dans lequel la couche de libération (6) a une épaisseur de couche de 20 µm ou plus et de 40 µm ou moins.

3. Tuyau marin (1) selon la revendication 1 ou 2, dans lequel la couche de libération (6) a un allongement à la rupture de 150 % ou plus et de 400 % ou moins.

4. Tuyau marin (1) selon l'une quelconque des revendications 1 à 3, dans lequel la couche de libération (6) a une résistance à la traction de 25 MPa ou plus et de 80 MPa ou moins.
